(19) **Europäisches Patentamt**

**European Patent Office**

**Office européen des brevets**

(11) **EP 0 940 044 B1**

(12) **EUROPEAN PATENT SPECIFICATION**

(45) Date of publication and mention
of the grant of the patent:
**27.03.2002 Bulletin 2002/13**

(21) Application number: **97940230.2**

(22) Date of filing: **08.09.1997**

(51) Int Cl.⁷: **H04N 17/00**

(86) International application number:
**PCT/GB97/02413**

(87) International publication number:
**WO 98/10595 (12.03.1998 Gazette 1998/10)**

(54) **METHOD AND APPARATUS TO DETECT THE PRESENCE OF NOISE**

VERFAHREN UND VORRICHTUNG ZUR RAUSCHDETEKTION

PROCEDE ET APPAREIL DE DETECTION DE LA PRESENCE DE BRUIT

(84) Designated Contracting States:
**DE ES FR GB IT NL**

(30) Priority: **06.09.1996 GB 9618697**

(43) Date of publication of application:
**08.09.1999 Bulletin 1999/36**

(73) Proprietor: **Tandberg Television ASA
1326 Lysaker (NO)**

(72) Inventor: **BOCK, Alois, Martin
Hampshire SO53 4RH (GB)**

(74) Representative: **Molyneaux, Martyn William et al
Wildman, Harrold, Allen & Dixon
11th Floor, Tower 3,
Clements Inn,
London WC2A 2AZ (GB)**

(56) References cited:
**WO-A-95/24785**   **US-A- 5 297 036**
**US-A- 5 504 473**

**Description**

The present invention relates to a method and apparatus to detect noise in a succession of samples of an electrical signal and is particularly adapted to detecting noise in samples of an electrical signal representing a sequence of images.

Image sequences are often impaired by small levels of noise. If a television camera is used under adverse lighting conditions, for example, the output signal level from the camera can drop to such an extent that the level of source noise becomes noticeable and causes unwanted distortion of the signal. Other examples where noise levels can build up are in multi-generation analogue video tapes or in the transmission of video signals over signal channels with low signal to noise ratios. This noise, particularly if its level is unknown, can cause problems in signal processing stages subsequent to the source of the noise. If the signal is a video signal which is to be digitally compressed, for example, the presence of noise can lead to picture artefacts such as "blockiness" if the transmission bandwidth is not high enough. Other examples where it is important to get a measure of the amount of noise in a video signal occur in video processing algorithms based on exploiting temporal frame difference signals. Such video processing algorithms include adaptive noise reduction algorithms.

The statistical properties of noise are quite similar to those of video signals. Indeed noise with appropriate spectral shaping is often used as a first approximation to model video signals. It is therefore not surprising that algorithms for the detection of source noise in video signals are often unreliable in so far as they can not distinguish low levels of noise from video signals which occur in fine texture.

US-A-5,504,473 describes a motion detecting system, where the signal from a transducer is analysed to distinguish between actual motion indicative of an intruder, typical noise expected for the area under supervision and the transducer, and a signal which indicates a trouble condition.

The present invention seeks to provide a method and apparatus for distinguishing the presence of noise in samples of an electrical signal irrespective of whether the signal represents a sequence of images including low-level detail.

According to the present invention there is provided a method of detecting whether noise is present in a succession of samples of an electrical signal representing a moving sequence of images, the method comprising the steps of: selecting, from the succession of samples, those having any one of a plurality of predetermined signal levels, accumulating a count of the samples of each predetermined signal level, and determining whether the accumulated counts conform to a predetermined distribution which is characteristic of the presence of noise within a moving sequence of images.

Further, according to the present invention there is provided an apparatus to detect whether noise is present in a succession of samples of an electrical signal representing a moving sequence of images, the apparatus comprising a plurality of comparator gates to select from the succession of samples those having predetermined signal levels corresponding respectively to the comparator gates, means to accumulate a count of the samples selected by each gate and means to determine whether the accumulated counts conform to a predetermined distribution which is characteristic of the presence of noise within a moving sequence of images.

The invention will now be described, by way of example, with reference to the accompanying drawings in which:

Figure 1 shows a block diagram of a noise level detector in accordance with the present invention and,
Figures 2A to 2C are explanatory diagrams of probability density functions.

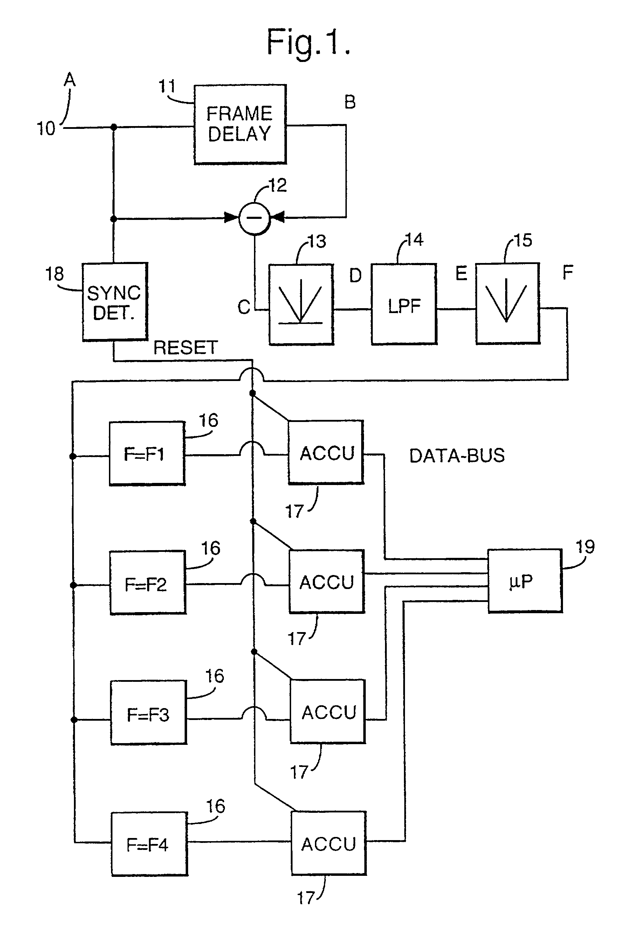

Referring to Figure 1, there is shown a noise level detector which receives at a terminal 10 an input signal A consisting of a television video signal having a succession of frames of interlaced fields. The input signal at the input terminal 10 is supplied to a frame delay 11. The input to the frame delay and the output B from the frame delay are applied to a difference circuit 12 which generates a signal representing the difference C between each frame of the television signal and the succeeding frame. The absolute value of the difference signal at the output from the difference circuit 12 is obtained by means of a detecting circuit 13.

The absolute frame difference signal D is spatially filtered in a low-pass filter circuit 14 by adding three consecutive horizontal samples of the difference signal. The filter circuit 14 has a gain of three to amplify the filtered difference signal E. Other more complex filters could be used but it has been found in practice that they add little to the functionality of the noise detection.

From the low-pass filter 14, a sampling circuit 15 derives a succession of samples F of the filtered difference signal. The number of samples is limited to reduce the complexity of the subsequent processing stages because it is the statistical properties of the signal that are important and not the instantaneous value. The sampled signal F is applied to a set of four comparator gates 16 each of which selects samples which have a signal level corresponding to a predetermined reference value F associated with the gate. Thus the first of the gates 16 has a reference value F1, the second gate 16 has a reference value F2, the third gate 16 has a reference value F3 and the fourth gate 16 has a reference value F4.

The samples selected by the gates 16 are passed to be counted by accumulators 17 associated respectively with the gates 16. If a pixel of the sampled signal F is equal in signal value to one of the reference values F1 to F4 of the gates 16, it is passed by the relevant gate to be added to the count in the respective accumulator 17 so that each count is incremented by one for each sample selected for that count.

A synchronising signal detector 18 detects the frame synchronising signal in the input signal A and generates therefrom a reset signal to reset each accumulator 17 after each frame of the video signal. Thus at the end of each frame, the accumulators 17 contain counts of the samples of the signal F and these counts constitute a representation of the probability density function (PDF) of the output of the filtered signal E. The count values are read into a microprocessor 19 and reset in the vertical blanking interval ready for the analysis in the next frame.

The microprocessor 19 implements a noise level algorithm to detect the presence of noise.

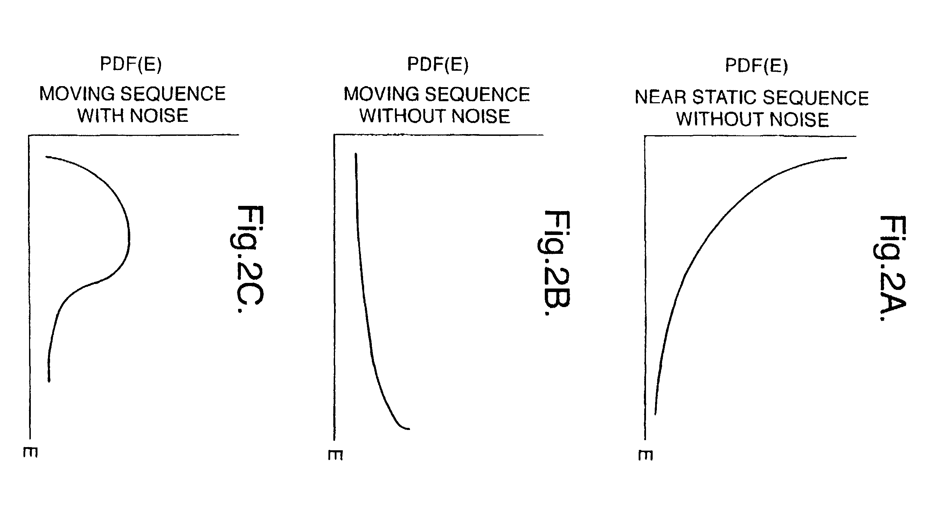

The noise detection algorithm is based on evaluating the probability density function (PDF) of the output of the filtered signal E. Figures 2A, 2B and 2C show the PDFs of signal E for various types of video of signals with and without noise. It can be seen that Gaussian noise, in particular, leads to a characteristic local maximum in the PDF at low levels. The proposed algorithm is based on the principle of first establishing whether a local maximum exists in the PDF at relatively low levels and then determining the exact level of the local maximum which is proportional to the level of noise. Note that it is the position of the local maximum, not the magnitude, which gives an indication of the noise floor.

The exact implementation of the noise algorithm depends on the number of comparators and counters used in the hardware and which can be 3 or more but can be varied from case to case. The principle, however, can be described on the basis of just four values. The four values are spread evenly over the dynamic range of the detector and, as such, represent a small subset of a discrete approximation of the PDF of signal F.

From these samples an approximation of the continuous PDF is reconstructed by fitting, for example, a third-order polynomial to the data points as shown in equation (1) although the polynomial could be a second or higher order polynomial depending on the number of comparators and counters.

$$PDF(x) = a + bx + cx^2 + dx^3 \qquad (1)$$

Other approximations are possible but are not considered further here. Using four supporting values $x_0 .. x_3$ the coefficients of equation (1) can be derived. As an example, the coefficients are derived for a spacing of $\Delta = 8$, ie $x_0 = 0$, $x_1 = 8$, $x_2 = 16$ and $x_3 = 24$, as follows:

$$a = PDF (0) \qquad (2)$$

$$b = (PDF(24)-4.5PDF(16)+9PDF(8)-5.5PDF(0))/24 \qquad (3)$$

$$c = (-PDF(24)+4PDF(16)-5PDF(8)+2PDF(0))/128 \qquad (4)$$

$$d = (PDF(24)-3PDF(16)+3PDF(8)-PDF(0))/3072 \qquad (5)$$

Having derived an approximate reconstruction of the PDF of signal ABC in the microprocessor, the noise level determination proceeds as follows. If there is no distinct local maximum discernible then the PDF is classified as signal with insignificant noise. A distinct local maximum in this sense is present if and only if the following two conditions are met.

$$PDF(x_1) > c_1 \, PDF \, (x_0) \qquad (6)$$

AND

$$PDF\,(x_2) > c_2\,PDF\,(x_3)$$

where $c_1$ and $c_2$ are constants $c_1 \cong c_2 \cong 2$

In other words, if both PDF $(x_1)$ and PDF $(x_2)$ are greater by a certain margin than the PDF at the boundaries of the dynamic range then the noise level can be determined from the local maximum of the PDF polynomial approximation. This is done by solving the quadratic equation

$$PDF'(x) = b + 2cx + 3dx^2 = 0 \qquad (8)$$

which will have at least one solution in the range $x_0 < x < x_3$ by virtue of conditions (6) and (7). If both solutions are in the range $x_0 < x < x_3$ then the value with the larger value of PDF $(x)$ is chosen. Therefore, equation (8) gives a measure of the noise level in the form

$$N = -c/(3d) \pm ((c/(3d))^{1/2} \qquad (9)$$

Note that a solution of equation (9) within the dynamic range by itself is a necessary but not sufficient condition for the classification of PDF $(x)$ as a signal with added noise.

A method for the determination of noise levels in video sequences has been described. Simulations have shown that the algorithm is robust in so far as it is able to distinguish between low-level detail and additive Gaussian noise.

There are many examples of signal processing applications where knowledge of the amount of noise which is present in image sequences is important. One of the more obvious applications of this method is the adaptive control of a noise filter which removes the detected noise. In this application it is particularly important that the algorithm can distinguish picture detail from noise, otherwise the application of the noise filter could lead to picture artefacts.

## Claims

1.  A method of detecting whether noise is present in a succession of samples (F) of an electrical signal (E) representing a moving sequence of images, the method comprising the steps of: selecting, from the succession of samples, those having any one of a plurality of predetermined signal levels (F1-F4), accumulating a count of the samples of each predetermined signal level, and determining whether the accumulated counts conform to a predetermined distribution which is characteristic of the presence of noise within a moving sequence of images.

2.  A method according to claim 1, wherein the step of determining whether the accumulated counts conform to a predetermined distribution, consists of determining whether the distribution exhibits a maximum within a predetermined range of signal values.

3.  A method as claimed in claim 1 or 2, including the further step of deriving the said electrical signal (E) by taking the difference (C, D) of a video signal (A) with a delayed version of itself (B).

4.  A method as claimed in claim 3, wherein the step of deriving the said electrical signal (E) consists of taking the absolute difference (D) of a video signal with a version of itself which has been delayed by one frame.

5.  A method as claimed in claim 3 or 4, including filtering the said difference signal (C, D) by means of a low pass filter (14) and sampling by means of a sampling circuit (15) to derive the said succession of samples (F).

6.  A method according to any one of the preceding claims wherein the plurality of predetermined signal levels (F1-F4) are 3 or more in number.

7.  A method as claimed in any one of the preceding claims wherein the step of determining whether the accumulated counts conform to a predetermined distribution consists of determining whether the predetermined distribution is representative of a second or higher order polynomial.

8. Apparatus to detect whether noise is present in a succession of samples (F) of an electrical signal (E) representing a moving sequence of images, the apparatus comprising a plurality of comparator gates (16) to select from the succession of samples those having predetermined signal levels (F1-F4) corresponding respectively to the comparator gates, means (17) to accumulate a count of the samples selected by each gate and means (19) to determine whether the accumulated counts conform to a predetermined distribution which is characteristic of the presence of noise within a moving sequence of images.

9. Apparatus according to claim 8, wherein the said means (19) to determine whether the accumulated counts conform to a predetermined distribution consist of means for determining whether the distribution exhibits a maximum within a predetermined range of signal values.

10. Apparatus according to claim 8 or 9, further including difference means (12) to derive the said electrical signal (E) from an input video signal (A) by taking the difference (C, D) of the video signal with a delayed version of itself (B).

11. Apparatus as claimed in claim 10, wherein the said difference means (12) is adapted to derive the absolute difference (D) of a video signal with a version of itself which has been delayed by one frame.

12. Apparatus as claimed in claim 10 or 11, wherein a low pass filter (14) is provided to filter the said difference signal (C, D) and sampling means (15) sample the filtered signal to derive the said succession of samples (F) therefrom.

13. Apparatus as claimed in any one of claims 8 to 12, wherein the said comparator gates (16) are 3 or more in number.

14. Apparatus as claimed in claim 11, wherein the said means (19) to determine whether the accumulated counts conform to a predetermined distribution are effective to determine whether the predetermined distribution is representative of a second or higher order polynomial.


**Patentansprüche**

1. Verfahren zum Feststellen, ob in einer Folge von Abtastwerten (F) eines elektrischen Signals (E), das eine Bewegungsbildsequenz darstellt, Rauschen vorhanden ist, wobei das Verfahren die folgenden Schritte umfaßt: Auswählen, aus der Folge von Abtastwerten, von jenen mit irgendeinem einer Vielzahl von vorbestimmten Signalpegeln (F1-Fn), Aufsummieren eines Zählwerts der Abtastwerte mit jedem vorbestimmten Signalpegel, und Feststellen, ob die aufsummierten Zählwerte einer vorbestimmten Verteilung entsprechen, die für die Anwesenheit von Rauschen innerhalb einer Bewegungsbildsequenz charakteristisch ist.

2. Verfahren nach Anspruch 1, wobei der Schritt des Feststellens, ob die aufsummierten Zählwerte einer vorbestimmten Verteilung entsprechen, aus dem Feststellen, ob die Verteilung ein Maximum innerhalb eines vorbestimmten Bereichs von Signalwerten aufweist, besteht.

3. Verfahren nach Anspruch 1 oder 2, einschließlich des weiteren Schritts des Ableitens des elektrischen Signals (E) durch Gewinnen der Differenz (C, D) eines Videosignals (A) mit einer verzögerten Version desselben (B).

4. Verfahren nach Anspruch 3, wobei der Schritt des Ableitens des elektrischen Signals (E) aus dem Gewinnen der absoluten Differenz (D) eines Videosignals mit einer Version desselben, die um ein Vollbild verzögert wurde, besteht.

5. Verfahren nach Anspruch 3 oder 4, einschließlich des Filterns des Differenzsignals (C, D) mit Hilfe eines Tiefpaßfilters (14) und des Abtastens mit Hilfe einer Abtastschaltung (15), um die Folge von Abtastwerten (F) abzuleiten.

6. Verfahren nach einem der vorangehenden Ansprüche, wobei die Vielzahl von vorbestimmten Signalpegeln (F1-Fn) 3 oder mehr in der Anzahl sind.

7. Verfahren nach einem der vorangehenden Ansprüche, wobei der Schritt des Feststellens, ob die aufsummierten Zählwerte einer vorbestimmten Verteilung entsprechen, aus dem Feststellen, ob die vorbestimmte Verteilung ein Polynom zweiter oder höherer Ordnung darstellt, besteht.

**8.** Vorrichtung zum Feststellen, ob in einer Folge von Abtastwerten (F) eines elektrischen Signals (E), das eine Bewegungsbildsequenz darstellt, Rauschen vorhanden ist, wobei die Vorrichtung eine Vielzahl von Vergleichergattern (16), um aus der Folge von Abtastwerten jene mit vorbestimmten Signalpegeln (F1-Fn) jeweils entsprechend den Vergleichergattern auszuwählen, eine Einrichtung (17) zum Aufsummieren eines Zählwerts der von jedem Gatter ausgewählten Abtastwerte und eine Einrichtung (19) zum Feststellen, ob die aufsummierten Zählwerte einer vorbestimmten Verteilung entsprechen, die für die Anwesenheit von Rauschen innerhalb einer Bewegungsbildsequenz charakteristisch ist, umfaßt.

**9.** Vorrichtung nach Anspruch 8, wobei die Einrichtung (19) zum Feststellen, ob die aufsummierten Zählwerte einer vorbestimmten Verteilung entsprechen, aus einer Einrichtung zum Feststellen, ob die Verteilung ein Maximum innerhalb eines vorbestimmten Bereichs von Signalwerten aufweist, besteht.

**10.** Vorrichtung nach Anspruch 8 oder 9, welche ferner eine Differenzeinrichtung (12) zum Ableiten des elektrischen Signals (E) aus einem Eingangsvideosignal (A) durch Gewinnen der Differenz (C, D) des Videosignals mit einer verzögerten Version desselben (B) umfaßt.

**11.** Vorrichtung nach Anspruch 10, wobei die Differenzeinrichtung (12) dazu ausgelegt ist, die absolute Differenz (D) eines Videosignals mit einer Version desselben, die um ein Vollbild verzögert wurde, abzuleiten.

**12.** Vorrichtung nach Anspruch 10 oder 11, wobei ein Tiefpaßfilter (14) zum Filtern des Differenzsignals (C, D) vorgesehen ist und eine Abtasteinrichtung (15) das gefilterte Signal abtastet, um die Folge von Abtastwerten (F) aus diesem abzuleiten.

**13.** Vorrichtung nach einem der Ansprüche 8 bis 12, wobei die Vergleichergatter (16) 3 oder mehr in der Anzahl sind.

**14.** Vorrichtung nach Anspruch 11, wobei die Einrichtung (19) zum Feststellen, ob die aufsummierten Zählwerte einer vorbestimmten Verteilung entsprechen, zum Feststellen, ob die vorbestimmte Verteilung ein Polynom zweiter oder höherer Ordnung darstellt, wirkt.

**Revendications**

**1.** Procédé pour détecter si un bruit est présent ou non dans une succession d'échantillons (F) d'un signal électrique (E) représentant une séquence mobile d'images, le procédé comprenant les étapes de : sélection, parmi la succession d'échantillons, de ceux qui ont un quelconque d'une pluralité de niveaux de signal prédéterminés (F1-F4) ; accumulation d'un compte des échantillons de chaque niveau de signal prédéterminé ; et détermination de ce que les comptes accumulés sont ou non conformes à une distribution prédéterminée qui est caractéristique de la présence de bruit dans une séquence mobile d'images.

**2.** Procédé selon la revendication 1, dans lequel l'étape de détermination de ce que les comptes accumulés sont ou non conformes à une distribution prédéterminée consiste à déterminer si la distribution présente ou non un maximum à l'intérieur d'une plage prédéterminée de valeurs de signal.

**3.** Procédé selon la revendication 1 ou 2, incluant l'étape supplémentaire de formation du dit signal électrique (E) par établissement de la différence (C, D) d'un signal vidéo (A) avec une version retardée (B) de ce dernier.

**4.** Procédé selon la revendication 3, dans lequel l'étape de formation du dit signal électrique (E) consiste à établir la différence absolue (D) d'un signal vidéo avec une version de ce dernier qui a été retardée d'une trame.

**5.** Procédé selon la revendication 3 ou 4, incluant le filtrage du dit signal de différence (C, D) au moyen d'un filtre passe-bas (14), et l'échantillonnage au moyen d'un circuit d'échantillonnage (15) pour obtenir la dite succession d'échantillons (F).

**6.** Procédé selon une quelconque des revendications précédentes, dans lequel la pluralité de niveaux de signal prédéterminés (F1-F4) sont au nombre de trois ou plus.

**7.** Procédé selon une quelconque des revendications précédentes, dans lequel l'étape de détermination de ce que les comptes accumulés sont ou non conformes à une distribution prédéterminée consiste à déterminer si la distribution prédéterminée est ou non représentative d'un polynôme du deuxième ordre ou d'un ordre supérieur.

8. Appareil pour détecter si un bruit est présent ou non dans une succession d'échantillons (F) d'un signal électrique (E) représentant une séquence mobile d'images, l'appareil comprenant une pluralité de portes de comparateur (16) pour sélectionner, parmi la succession d'échantillons, ceux qui ont des niveaux de signal prédéterminés (F1-F4) correspondant respectivement aux portes de comparateur, des moyens (17) d'accumulation d'un compte des échantillons sélectionnés par chaque porte, et des moyens (19) de détermination de ce que les comptes accumulés sont ou non conformes à une distribution prédéterminée qui est caractéristique de la présence de bruit dans une séquence mobile d'images.

9. Appareil selon la revendication 8, dans lequel les dits moyens (19) de détermination de ce que les comptes accumulés sont ou non conformes à une distribution prédéterminée consistent en moyens de détermination de ce que la distribution présente ou non un maximum à l'intérieur d'une plage prédéterminée de valeurs de signal.

10. Appareil selon la revendication 8 ou 9, incluant en outre des moyens de différence (12) pour obtenir le dit signal électrique (E) à partir d'un signal vidéo d'entrée (A) par établissement de la différence (C, D) entre le signal vidéo et une version retardée (B) de celui-ci.

11. Appareil selon la revendication 10, dans lequel les dits moyens de différence (12) sont prévus pour établir la différence absolue (D) entre un signal vidéo et une version de celui-ci qui a été retardée d'une trame.

12. Appareil selon la revendication 10 ou 11, dans lequel un filtre passe-bas (13) est prévu pour filtrer le dit signal de différence (C, D), et des moyens d'échantillonnage (15) échantillonnent le signal filtré pour produire la dite succession d'échantillons (F) à partir de ce dernier.

13. Appareil selon une quelconque des revendications 8 à 12, dans lequel les dites portes de comparateur 16 sont au nombre de 3 ou plus.

14. Appareil selon la revendication 11, dans lequel les dits moyens. (19) de détermination de ce que les comptes accumulés sont ou non conformes à une distribution prédéterminée agissent de manière à déterminer si la distribution prédéterminée est ou non représentative d'un polynôme du deuxième ordre ou d'un ordre supérieur.

# Fig.1.

# Fig.2A.

# Fig.2B.

# Fig.2C.